(19) Europäisches Patentamt
European Patent Office
Office européen des brevets

(11) EP 4 765 276 A1

(12) EUROPEAN PATENT APPLICATION
published in accordance with Art. 153(4) EPC

(43) Date of publication:
24.06.2026 Bulletin 2026/26

(21) Application number: 25837653.2

(22) Date of filing: 11.07.2025

(51) International Patent Classification (IPC):
H01M 10/04 (2006.01)        H01M 10/0565 (2010.01)
H01M 10/0585 (2010.01)      H01M 10/0525 (2010.01)
H01M 4/04 (2006.01)         H01M 50/618 (2021.01)
H01M 4/02 (2006.01)

(52) Cooperative Patent Classification (CPC):
H01M 4/02; H01M 4/04; H01M 10/04;
H01M 10/0525; H01M 10/0565; H01M 10/0585;
H01M 50/618; Y02E 60/10; Y02P 70/50

(86) International application number:
PCT/KR2025/010173

(87) International publication number:
WO 2026/014977 (15.01.2026 Gazette 2026/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.07.2024  KR 20240092124
10.07.2025  KR 20250093154

(71) Applicant: LG Energy Solution, Ltd.
Seoul 07335 (KR)

(72) Inventors:
• RYU, Jihoon
  Daejeon 34122 (KR)
• JUN, Youngjin
  Daejeon 34122 (KR)
• JEONG, Seyoung
  Daejeon 34122 (KR)

(74) Representative: BCKIP Part mbB
Landsberger Straße 98
80339 München (DE)

(54) BIPOLAR BATTERY AND MANUFACTURING METHOD THEREFOR

(57) According to an embodiment of the present disclosure, provided is a bipolar battery comprising:
a bipolar assembly comprising a stacked body containing a bipolar electrode and a separator, and a gel electrolyte impregnated throughout the stacked body; and a battery case,
and not comprising an interfacial gap at the interface between the bipolar electrode and the separator,
wherein the gel electrolyte voids within the stacked body are 5% or less of the total volume capable of gel electrolyte impregnation.

**Description**

**[TECHNICAL FIELD]**

Cross-Reference to Related Application(s)

This application claims priority to and the benefit of Korean Patent Application no. 10-2024-0092124, filed on July 12, 2024, and Korean Patent Application no. 10-2025-0093154, filed on July 10, 2025, the entire contents of which are incorporated herein by reference.

The present disclosure relates to a bipolar battery and a manufacturing method thereof.

**[BACKGROUND ART]**

Recently, there has been a rising demand for high-capacity, high-output, and high-stability secondary batteries as an application area of lithium secondary batteries has rapidly expanded to power storage supply of large-area devices, such as automobiles and power storage devices, as well as power supply of electronic devices such as electrical, electronic, communication, and computer devices.

Electrodes used in such secondary batteries can be classified into monopolar electrodes in which active materials having the same polarity are coated onto both surfaces of the current collector, and bipolar electrodes in which active materials having different polarities are coated onto both surfaces of the current collector.

Secondary batteries using a monopolar electrode have a connection portion for connecting electrodes, so that the output may be reduced due to the electrical resistance of the connection portion. Also, the temperature rise due to Joule heating may lead to various problems in terms of cell safety, and the battery components for heat dissipation structure, heat monitoring, and wiring occupy a lot of space in the battery pack, resulting in poor space efficiency. On the other hand, secondary batteries using bipolar electrodes are used by stacking electrodes without such a connection portion, so the connection resistance of the electrodes can be minimized, resulting in excellent output performance, and the structure and components are simplified, resulting in good space efficiency. Therefore, the energy density and output density per volume can be significantly improved compared to conventional lithium ion batteries.

Despite these advantages, bipolar batteries are extremely important to prevent leakage of the electrolyte impregnated in them, and thus, all-solid-state electrolytes having no fluidity are applied.

However, the current technology is insufficient to develop an all-solid-state electrolyte at a level suitable for industrial use, and thus, batteries are still manufactured using a liquid electrolyte or a gel electrolyte.

Conventional methods for manufacturing bipolar batteries using such liquid electrolytes or gel electrolytes include a direct injection method, an electrode coating/impregnation method, an electrode slurry mixing method, and the others.

The direct injection method is a method of injecting an electrolyte after manufacturing the bipolar in a sealed structure, that is, a structure in which the bipolar is manufactured and sealed in unit cell units to prevent electrolyte leakage. However, realizing such a sealed structure is not only complex, but also poses process difficulties and requires a considerable amount of time, because the assembly is manufactured after performing this process for each unit cell.

Additionally, the electrode coating/impregnation method is performed by a method in which an electrolyte is coated onto an electrode sheet or separator, impregnated with the electrolyte and then subjected to a curing process, and finally the electrode and separator are cut and stacked. The electrode slurry mixing method is performed by a method in which an electrode slurry and an electrolyte are mixed together to form a mixture, the mixture is then subjected to a curing process, and finally the cured electrode is cut and stacked.

However, in both of the above methods, electrodes impregnated with electrolyte, or electrodes mixed with electrolyte are exposed to the outside during the manufacturing process, whereby not only electrolyte volatilization occurs rapidly, but also the curability deteriorates significantly due to the presence of oxygen even during the electrolyte curing process, thereby posing a safety problem.

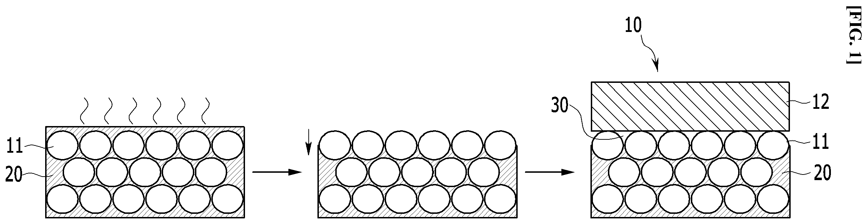

Furthermore, when a bipolar battery is manufactured by such a conventional manufacturing method, the electrolyte 20 on the surface part of the electrode 11 is depleted due to volatilization of the electrolyte 20 generated on the surface of the electrode 11 as shown in FIG. 1. Consequently, during manufacture of the unit cell 10, a gel electrolyte volatilization space, i.e., a gel electrolyte interface pore 30, between interfaces of the electrode 11 and the separator 12 is generated, which acts as battery resistance and thus reduces battery performance.

Therefore, there is a need to develop a bipolar battery that addresses the above problem and simultaneously has a simplified structure.

**[DETAILED DESCRIPTION OF THE INVENTION]**

**[Technical Problem]**

It is an object of the present disclosure to provide a bipolar battery that has substantially no pores in a gel electrolyte within a stacked body and thus exhibits improved battery performance because curing of the gel electrolyte is performed after manufacturing the stacked body, and a manufacturing method thereof.

It is another object of the present disclosure to provide a bipolar battery that applies a gel electrolyte but does not require a separate sealing structure, thereby simplifying the structure.

It is yet another object of the present disclosure to provide a manufacturing method of a bipolar assembly that not only allows uniform electrolyte impregnation in components within the bipolar assembly but also can save electrolyte impregnation time.

It is an object of the present disclosure to provide a bipolar battery that can minimize volatilization of a gel electrolyte during manufacture of a bipolar battery, and thus can be applied to various electrolytes without being limited to electrolyte materials, and a manufacturing method thereof.

**[Technical Solution]**

According to an aspect of the present disclosure, there is provided a bipolar battery comprising:

a bipolar assembly comprising a stacked body containing a bipolar electrode and a separator, and a gel electrolyte impregnated throughout the stacked body; and a battery case,
wherein the gel electrolyte voids within the stacked body are 5% or less of the total volume capable of gel electrolyte impregnation.

In this case, the bipolar electrode may comprise an integrated electrode in which a positive electrode active material layer and a negative electrode active material layer are respectively coated onto both surfaces of a single current collector, a positive electrode in which a positive electrode active material layer is formed on one surface of a positive electrode collector, or a negative electrode in which a negative electrode active material layer is formed on one surface of a negative electrode collector.

The stacked body may be configured to stack at least one selected from the group consisting of: a unit cell having a structure in which the positive electrode active material layer of the integrated electrode and the separator face each other, a unit cell having a structure in which the positive electrode and the negative electrode are separately included and the separator is interposed between the positive electrode and the negative electrode, a unit cell having a structure in which a single-sided electrode and a separator are stacked, and a single-sided electrode.

Further, the stacked body may be configured such that single-sided electrodes of different polarities are located on both outermost sides in the stacking direction.

The stacked body may not comprise a sealing member.

On the other hand, the gel electrolyte comprises an electrolyte composition having a flash point of less than 90°C, and specifically, the electrolyte composition having a flash point of less than 90°C may be contained in an amount of 10% or more based on the total volume of the electrolyte composition contained in the gel electrolyte.

The electrolyte composition having a flash point of less than 90°C may be at least one selected from the group consisting of methyl formate, ethyl formate, 1,2-dimethoxyethane, methyl acetate, 1,3-dioxolane, ethyl acetate, methyl propionate, propyl acetate, methyl butyrate, tris(trimethylsilyl)phosphate, dimethyl carbonate, propyl propionate, ethyl methyl carbonate, diethyl carbonate, ethyl propionate, ethyl butyrate, butyronitrile, ethyl methyl sulfone, propyl butyrate, diethylene glycol dimethyl ether, vinylene carbonate, and glycol sulfite.

Furthermore, according to the present disclosure, all the bipolar electrodes and all the separators included in the stacked body may be wholly coupled in a stacked state by the gel electrolyte.

Moreover, a positive electrode terminal and a negative electrode terminal may be respectively attached to the outermost electrodes on both sides of the bipolar assembly in the stacking direction.

On the other hand, according to another aspect of the present disclosure, there is provided a method for manufacturing a bipolar battery, the method comprising:

(a) preparing a unit cell by stacking a bipolar electrode and a separator,
(b) manufacturing a stacked body by stacking two or more of the unit cells such that a single-sided electrode is disposed at the outermost part,
(c) housing and impregnating the stacked body in a housing member containing a gel electrolyte composition, and curing the gel electrolyte composition in a pressurized state to form a gel electrolyte.

In this case, the unit cell may be prepared by cutting the bipolar electrode and the separator into unit sizes and then adhering them to each other.

Each of the unit cells may have a structure that not comprise a sealing member.

The gel electrolyte composition may contain an electrolyte composition having a flash point of less than 90°C in an amount of 10% or more based on the total solvent volume.

On the other hand, when the gel electrolyte composition is impregnated, the housing member in which the stacked body is housed may be, for example, an open-type electrolyte box having an opened upper part, or a battery case that houses the stacked body.

Therefore, when the housing member is the electrolyte box, the method may further comprise housing the stacked body in a battery case after the gel electrolyte is formed.

On the other hand, impregnation of the gel electrolyte composition may be performed under a vacuum application state.

The vacuum application may involve repeating vacuum application and vacuum release four or more times.

The vacuum application may be maintained in the range of -100 kPa to -90 kPa for 3 to 10 minutes per application.

Subsequently, the curing performed together with pressurization may be performed by applying heat at a temperature in the range of 50°C to 80°C under vacuum conditions for a period of 2 to 10 hours.

Furthermore, the method for manufacturing a bipolar battery according to the present disclosure may further comprise releasing the pressurized state after curing of the gel electrolyte composition.

A bipolar battery in which a positive electrode terminal and a negative electrode terminal are respectively attached to the outermost electrodes on both sides in the stacking direction of the bipolar assembly is provided.

[BRIEF DESCRIPTION OF THE DRAWINGS]

FIG. 1 shows a cross-sectional schematic diagram of a bipolar unit cell manufactured by a conventional manufacturing method.

FIG. 2 shows a cross-sectional schematic diagram of a bipolar assembly according to an embodiment of the present disclosure.

FIG. 3 shows a cross-sectional schematic diagram of a bipolar unit cell according to an embodiment of the present disclosure.

FIG. 4 shows a cross-sectional schematic diagram of a bipolar unit cell according to another embodiment of the present disclosure.

FIG. 5 shows a cross-sectional schematic diagram of a bipolar battery according to an embodiment of the present disclosure.

FIG. 6 shows a schematic diagram of a method for manufacturing a bipolar battery according to an embodiment of the present disclosure.

FIG. 7 is a comparative graph showing the electrode volatility due to structural differences in Experimental Example 1.

FIG. 8 is a voltage-capacity graph based on the cycles of Comparative Example 1 in Experimental Example 2.

FIG. 9 is a voltage-capacity graph based on the cycles of Example in Experimental Example 2.

[DETAILED DESCRIPTION OF THE EMBODIMENTS]

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Throughout the descriptions herein, when a certain part "includes" a component, this does not indicate that the certain part excludes other components, but indicates that the part may further include other components, unless otherwise defined.

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein. In the specification and drawings, the same or similar components throughout the description will be denoted with the same reference numerals.

Furthermore, the drawings of the present disclosure include a part shown in a hatched structure and a part that is not so, however, the components having a hatched structure represent a state in which the gel electrolyte is impregnated, while those having no hatched structure represent a state in which the gel electrolyte is not impregnated.

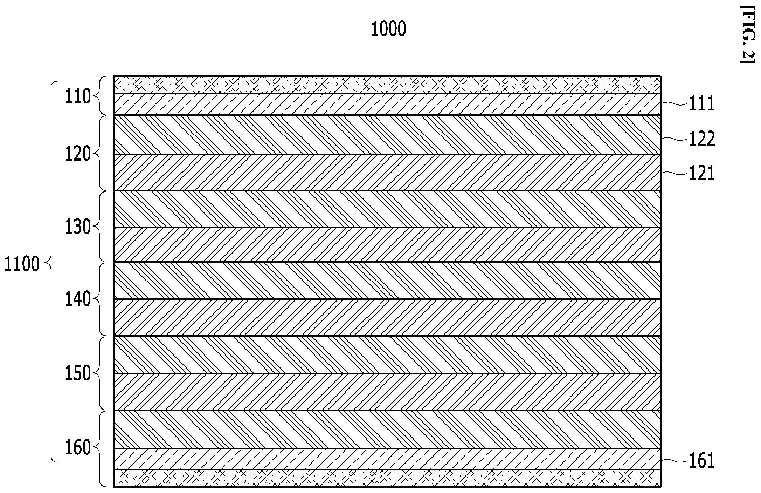

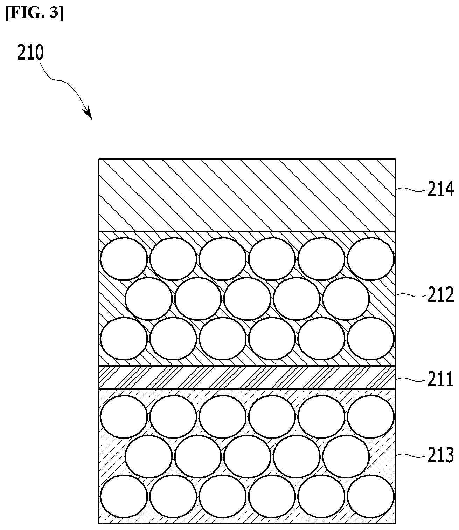

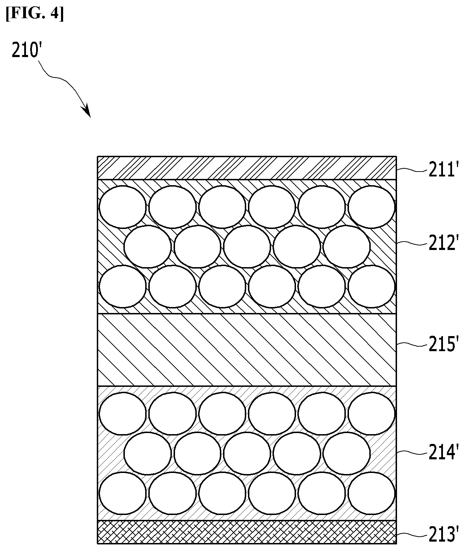

Thus, in FIG. 2, which will be described below, a hatched structure is used and displayed to illustrate the state in which respective components are impregnated with a gel electrolyte. Unlike the same, the unit cells of FIGS. 3 and 4 are impregnated with a gel electrolyte after manufacture of the stacked body according to the present disclosure, whereby the unit cells are not shown in a hatched structure because they are in the state before being impregnated with the gel electrolyte.

According to an embodiment of the present disclosure, there is provided a bipolar battery comprising: a bipolar assembly comprising a stacked body containing a bipolar electrode and a separator, and a gel electrolyte impregnated throughout the stacked body; and a battery case,

wherein the gel electrolyte voids within the stacked body are 5% or less of the total volume capable of gel electrolyte impregnation.

## Bipolar assembly

The bipolar assembly comprises a stacked body containing a bipolar electrode and a separator, and a gel electrolyte impregnated throughout the stacked body, wherein the gel electrolyte voids within the stacked body are 5% or less of the total volume capable of gel electrolyte impregnation.

FIG. 2 shows a schematic cross-sectional view to more clearly explain the structure of a bipolar assembly 1000. FIG. 3 shows a schematic cross-sectional view of a unit cell that constitutes bipolar assembly 1000 as an example. FIG. 4 shows a schematic cross-sectional view of a unit cell that constitutes a bipolar assembly 1000 as another example.

Referring to FIG. 2, the bipolar assembly 1000 includes a stacked body 1100, wherein the stacked body 1100 has a structure impregnated with a gel electrolyte.

In this case, according to the present disclosure, the gel electrolyte voids may be 5% or less and may hardly exist within the stacked body 1100.

Here, the gel electrolyte pores are those where the gel electrolyte volatilizes and no gel electrolyte remains during manufacture of the stacked body, with only the material constituting the electrode (typically, 121) or separator (typically, 122) being present, and the gel electrolyte pores do not need to be uniformly present as a whole.

In this case, the gel electrolyte pore refers to the total volume that can be impregnated with the gel electrolyte, namely, the volume that is not impregnated with the gel electrolyte based on the total volume of the voids of the electrode (typically, 121) and the voids of the separator (typically, 122).

Therefore, the gel electrolyte voids are determined by calculating the pore volume of each of the electrode and the separator, wherein the pore volume for each component may be calculated using the thickness and weight. In addition to this, the electrolyte weight is calculated from the weight of the impregnated electrolyte, namely, the weight difference between before and after the electrolyte impregnated inside the stacked body is completely volatilized at high temperature. The impregnated volume of the electrolyte is then calculated based on the electrolyte density. Subsequently, subtracting the impregnated volume of the electrolyte from the total pore volume yields the gel electrolyte pore volume, thereby allowing the ratio of the gel electrolyte pore volume to the total pore volume to be calculated.

That is, the bipolar assembly 1000 according to the present disclosure has little volatility of the gel electrolyte, so that the voids of the gel electrolyte that do not contain the gel electrolyte are substantially absent, and may be included in an amount of 5% or less, specifically 3% or less, more specifically 0.1% to 2%, and most specifically 0.1% to 1%.

Meanwhile, the stacked body 1100 may have a structure in which the unit cells 110, 120, 130, 140, 150, 160 are stacked. Each of the unit cells 120, 130, 140, 150, 160 may include a bipolar electrode (typically, 121) and a separator (typically, 122). The unit cell 110 may be formed of a single-sided electrode 111, such that a single-sided electrode may be located at the outermost shell of the overall structure.

The stacked body 1100 may have a structure in which single-sided electrodes 111, 161 of different polarities are located on both outermost sides in the stacking direction.

In this case, the bipolar electrode 121 may include an integrated electrode in which a positive electrode active material layer and a negative electrode active material layer are respectively coated onto both surfaces of a single current collector, a positive electrode in which a positive electrode active material layer is formed on one surface of a positive electrode collector, or a negative electrode in which a negative electrode active material layer is formed on one surface of a negative electrode collector.

Therefore, the stacked body 1100 may be configured to stack at least one selected from the group consisting of: a unit cell having a structure in which the positive electrode active material layer of the integrated electrode and the separator face each other, a unit cell having a structure in which the positive electrode and the negative electrode are separately included and the separator is interposed between the positive electrode and the negative electrode, a unit cell having a structure in which a single-sided electrode and a separator are stacked, and a single-sided electrode.

Here, the single-sided electrode may be a single-sided positive electrode or a single-sided negative electrode.

It goes without saying that as long as the stacked body 1100 has a structure in which a positive electrode and a negative electrode are alternately disposed, it may be formed of one of these types, or may be formed of a mixture of two types, or a mixture of three types.

The unit cell 110 comprised of a single-sided electrode 111 and the unit cell 160 having a structure in which a single-sided electrode 161 and a separator are stacked are as shown in FIG. 2, and therefore, these structures will not be described in further detail.

Meanwhile, FIGS. 3 and 4 respectively show two types of unit cells 210, 210' excluding a single-sided electrode, and unit cells having a structure in which a single-sided electrode and a separator are stacked.

Referring to FIGS. 3 and 4, FIG. 3 shows a unit cell 210 including an integrated electrode, and FIG. 4 shows a unit cell 210' having both a positive electrode and a negative electrode as separate electrodes.

First, referring to FIG. 3, the unit cell 210 includes an integrated electrode having a structure in which a positive electrode active material layer 212 is formed on one surface of a current collector 211 and a negative electrode active material layer 213 is formed on the other surface.

The separator 214 may be formed on one or both sides of the positive electrode active material layer 212 and the negative electrode active material layer 213, and the position thereof is not limited, and in particular, it may be formed on one side facing the positive electrode active material layer 212.

Therefore, when unit cells 210 having this structure are sequentially stacked to form a stacked body, a separator is located at the outermost shell of one side. Therefore, a single-sided electrode can be further included at the outermost shell where the separator is located, and the unit cells composed of the separator and single-sided electrodes can be located so that the active material layer is not present on the outermost layer on the other side, thereby completing a stacked body having the structure as shown in FIG. 2.

Next, referring to FIG. 4, the unit cell 210' has a structure in which a positive electrode includes a positive electrode active material layer 212' on one surface of a positive electrode current collector 211', a negative electrode includes a negative electrode active material layer 214' on one surface of a negative electrode current collector 213', and a separator 215' is interposed between the positive electrode and the negative electrode.

When these unit cells 210' are sequentially stacked to form a stacked body, single-sided electrodes of different polarities are located on both outermost sides, thereby eliminating the need to include a separate single-sided electrode or unit cells with a structure in which a single-sided electrode and a separator are stacked.

However, since the current collectors of the unit cells in this stacked body face each other, an electroconductive adhesive having conductivity may be applied between the current collectors for stronger coupling.

Referring again to FIGS. 3 and 4 together, the current collector 211 used in the integrated electrode having the structure of FIG. 3 must have the positive electrode active material layer 212 and the negative electrode active material layer 213 formed on both surfaces. Therefore, the current collector is not particularly limited so long as it has high conductivity without causing a chemical change in the corresponding battery. For example, the current collector used herein may include stainless steel, nickel, titanium, baked carbon, or a material formed by surface-treating a surface of aluminum or stainless steel with carbon, nickel, titanium, silver, or the like, but specifically, a material formed by surface-treating a surface of aluminum or stainless steel with carbon, nickel, titanium, silver, or the like may be used. Additionally, the current collector may be a clad foil made by rolling two or more metal foils. For example, it may be a structure in which two or more metals such as Al, Cu, Ni, SUS, etc. are bonded by cold rolling, or may also be a structure in which another metal is deposited or coated as a thin film on one metal.

On the other hand, in the unit cell 210' having the structure of FIG. 4, which is manufactured using the positive electrode current collector 211' and the negative electrode current collector 213' separately, the positive electrode current collector 211' is not particularly limited so long as it has high conductivity without causing a chemical change in the corresponding battery. For example, the current collector used herein may include stainless steel, aluminum, nickel, titanium, baked carbon, or a material formed by surface-treating a surface of aluminum or stainless steel with carbon, nickel, titanium, silver, or the like, but specifically, it may be an Al current collector. Here, the Al current collector may be made of Al, wherein it is a concept of further including other metal materials to the extent of impurity content.

The negative electrode current collector 121 is not particularly limited so long as the negative electrode current collector has high conductivity without causing a chemical change in the battery. For example, copper, stainless steel, nickel, titanium, baked carbon, or a material formed by surface-treating a surface of copper or stainless steel with carbon, nickel, titanium, silver, or the like, or aluminum-cadmium alloys, or the like may be used. Specifically, it may be a Cu current collector, wherein the Cu current collector may be made of Cu, which is a concept of further including other metal materials at approximately impurity content level.

Regardless of its type, the current collector used in the bipolar assembly 1100 may have a thickness of 3 $\mu$m to 500 $\mu$m, and fine protrusions and depressions may be formed on the surface of the current collector, thereby reinforcing the binding strength of the active material layer. For example, the current collector may be used in various forms such as a film, a sheet, a foil, a net, a porous body, a foam body, a nonwoven fabric, etc.

The positive electrode active material layers 212, 212' may include a positive electrode active material, a binder, and further a conductive material.

The positive electrode active material is a compound capable of reversible intercalation and deintercalation of lithium, and various combinations are possible. Examples thereof may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where, $0<Z<2$), etc.), lithium-nickel-cobalt-based oxide (e.g., $LiNi_{1-Y1}Co_{Y1}O_2$ (where, $0<Y1<1$), etc.), lithium-manganese-cobalt-based oxide (e.g., $LiCo_{1-Y2}Mn_{Y2}O_2$ (where, $0<Y2<1$), $LiMn_{2-Z1}Co_{Z1}O_4$ (where, $0<Z1<2$), etc.), lithium-nickel-manganese-cobalt-based oxide (e.g., $Li(Ni_pCo_qMn_r)O_2$ (where, $0<p<1$, $0<q<1$, $0<r<1$, $p+q+r=1$) or $Li(Ni_{p1}Co_{q1}Mn_{r1})O_4$ (where, $0<p1<2$, $0<q1<2$, $0<r1<2$, $p1+q1+r1=2$), etc.), or lithium-nickel-cobalt-transition metal(M) oxide (e.g., $Li(Ni_{p2}Co_{q2}Mn_{r2}M_{s2})O_2$ (where M is selected from the group consisting of Al, Fe, V, Cr, Ti, Ta, Mg and Mo, and p2, q2, r2 and s2 are atomic fractions of each independent elements, wherein $0<p2<1$, $0<q2<1$, $0<r2<1$, $0<s2<1$, $p2+q2+r2+s2=1$), etc.), lithium iron phosphate (e.g., $Li_{1+a1}Fe_{1-x1}M_{x1}(PO_{4-b1})X_{b1}$ (where M is at least one selected from Al, Mg and Ti, X is at least one selected from F, S and N, and $-0.5\leq a1\leq0.5$, $0\leq x1\leq0.5$, $0\leq b1\leq0.1$), and any one thereof or a compound of two or more thereof may be included. Specifically, the positive electrode active material may include a lithium transition metal oxide represented by the following Formula 1, and particularly $0.5\leq x\leq0.7$, $0\leq b\leq0.1$, and more particularly, M may be Co and Mn, or may be Co, Mn, and Al.

$$[Formula\ 1] \qquad Li_{1+a}Ni_xM_{1-x}O_{2-b}X_b$$

wherein, in Formula 1, M is at least one element selected from the group consisting of Mn, Co, Al, Fe, V, Cr, Ti, Ta, Mg, and Mo, X is at least one element selected from F, S, and N, and $0\leq a\leq0.5$, $0.3\leq x<0.8$, $0\leq b\leq0.1$.

Alternatively, specifically, it may be lithium iron phosphate.

The binder is a component that assists in the binding between the conductive material, the positive electrode active material, and the positive electrode current collector. Examples of such a binder include polyvinylidene fluoride (PVDF), polyvinyl alcohol, polytetrafluoroethylene (PTFE), carboxymethyl cellulose (CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrene-butadiene rubber, fluororubber, various copolymers thereof, and the like.

Typically, the binder may be included in an amount of 0.5 to 20 wt.%, particularly 0.5 to 10 wt.%, and more particularly 0.5 to 5 wt.%, based on the total weight of the positive electrode active material layers 212, 212'.

The conductive material is a component for further improving the conductivity of the positive electrode active material. Such a conductive material is not particularly limited as long as it has conductivity without causing any chemical change in the corresponding battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be included in an amount of 0.01 to 20 wt.%, particularly 0.1 to 10 wt.%, and more particularly 0.1 to 5 wt.%, based on the total weight of the positive electrode active material layers 212, 212'.

In addition, other additives may further include, for example, a filler or the like as a component for inhibiting the expansion. The filler is not particularly limited as long as it can inhibit the expansion of the electrode without causing any chemical change in the corresponding battery, and examples thereof may include olefinic polymers such as polyethylene and polypropylene; fibrous materials such as glass fibers and carbon fibers, and the like.

The negative electrode active material layers 213, 214' may include a negative electrode active material, a binder, a conductive material, and other additives as described above.

The negative electrode active material may include at least one carbon-based material selected from the group consisting of graphite, amorphous hard carbon, low-crystalline soft carbon, carbon black, acetylene black, Ketjen black, super P, graphene and fibrous carbon; Si-based materials; Si/C composite; metal composite oxides such as $Li_xFe_2O_3$ ($0\leq x\leq1$), $Li_xWO_2$ ($0\leq x\leq1$), $Sn_xMe_{1-x}Me'_yO_z$ (Me: Mn, Fe, Pb, Ge; Me': Al, B, P, Si, Group 1, 2, 3 elements in the periodic table, halogen; $0<x\leq1$; $1\leq y\leq3$; $1\leq z\leq8$); lithium metal; metals such as Al, Cu, Ge, Si, Sn, etc.; lithium alloys; silicon-based alloys; tin-based alloys; metal oxides such as $SiO$, $SiO_2$, $SnO$, $SnO_2$, $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, and $Bi_2O_5$; a conductive polymer such as polyacetylene; Li-Co-Ni based materials; titanium oxide; lithium titanium oxide, or the like, but are not limited thereto as long as they are known in the art.

The positive electrode active material layer and the negative electrode active material layer can be manufactured by either a wet or dry method. Specifically, both a wet method which involves dispersing the electrode material containing the active material, binder, conductive material, etc. in a solvent and coating it, and a dry method which involves applying a free-standing film manufactured by dry-mixing the active material, conductive material, etc. with a fiberized binder, such as PTFE, and then calendering the mixture may be used.

The separators 214, 215' can be used without particular limitation as long as it is typically used as a separator in a secondary battery, and particularly, a separator having excellent moisture-retention ability for an electrolyte as well as low resistance to the movement of electrolyte ions may be preferably used.

For example, the separators 214, 215' used herein may include a porous polymer film including a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof. Also, a typical porous nonwoven fabric, for example, a nonwoven fabric formed of high melting point glass fibers or polyethylene terephthalate fibers may be used as the separator.

Alternatively, the separator may be a safety reinforced separator (SRS) in which a coating layer containing binding materials and inorganic particles is formed on one surface or both surfaces of the polymer substrate as described above.

The polyolefin substrate of the SRS used herein may be the separator materials described above, and the coating layer includes an inorganic particle and a binding material.

Here, the inorganic particle makes it possible to form an empty space between inorganic particles, and plays a role to form a fine porosity and also serves as a spacer capable of maintaining a physical form. Further, the inorganic particle has a feature of not having a physical property changed even at a high temperature of 200°C or higher, and thus the organic-inorganic mixed layer formed comes to have an excellent thermal resistance.

The inorganic particles are not particularly limited, as long as they are electrochemically stable. In other words, the inorganic particles which may be used in the present disclosure are not particularly limited, unless they cause an oxidation and/or reduction reaction in a working voltage range of a battery to be applied. In particular, in case of using an inorganic particle having an ion transfer capacity, an ionic conductance in electrochemical elements may be increased to improve a performance, and thus the one having a high ion conductance is preferable. Further, if the inorganic particle has a high density, it is difficult to disperse such particles during manufacturing and there is a problem of increasing a weight when manufacturing a battery. Thus, the one having a small density is preferable, if possible. In addition, an inorganic material having a high dielectric constant contributes to an increase in a degree of dissociation of electrolytic salt in liquid electrolyte, e.g., lithium salt, thereby improving the ion conductivity of the electrolyte. Finally, inorganic particles having thermal conductivity are more preferable because they have excellent heat absorbing ability and therefore inhibit the phenomenon in which heat is concentrated locally to form a heat generation point, leading to thermal runaway.

For the reasons mentioned above, the inorganic particle is preferably one or more selected from the group consisting of (a) a high-dielectric constant inorganic particle having a dielectric constant of 1 or more, 5 or more, preferably 10 or more, (b) an inorganic particle having piezoelectricity, (c) a thermal conductive inorganic particle, and (d) an inorganic particle having a lithium ion transfer ability.

The inorganic particle having piezoelectricity means a material which is a non-conductor at atmospheric pressure, but which has an electrified property due to a change in an internal structure when a certain pressure is applied. Such inorganic particle exhibits a high dielectric characteristic, in which a dielectric constant is 100 or more. If such inorganic particle is tensioned or compressed upon the application of a certain pressure, electric charges are generated to respectively charge one side positively and the other side negatively. Thus, such particle is a material which has a function of causing a potential difference between both sides.

Examples of the inorganic particle having piezoelectricity include $BaTiO_3$, $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT) hafnia ($H_fO_2$), a mixture thereof or the like, but are not limited thereto.

The inorganic particle having the lithium ion transfer capacity refers to an inorganic particle containing a lithium element, but not storing lithium, and simultaneously having a function of transfering a lithium ion. The inorganic particle having the lithium ion transfer capacity may transfer and move a lithium ion due to a kind of defects present inside a structure of particle. Thus, such particle may prevent a decrease in lithium mobility, thereby preventing a decrease in a battery capacity.

Examples of the inorganic particle having the lithium ion transfer capacity include: lithium phosphate ($Li_3PO_4$), lithium titanium phosphate ($Li_xTi_y(PO_4)_3$, 0<x<2, 0<y<3), lithium aluminum titanium phosphate ($Li_xAl_yTi_z(PO_4)_3$, 0<x<2, 0<y<1, 0<z<3), (LiAlTiP)$_xO_y$-based glass (0<x<4, 0<y<13) such as $14Li_2O$-$9Al_2O_3$-$38TiO_2$-$39P_2O_5$, etc.; lithium lanthanum titanate ($Li_xLa_yTiO_3$, 0<x<2, 0<y<3); lithium germanium thiophosphate ($Li_xGe_yP_zS_w$, 0<x<4, 0<y<1, 0<z<1, 0<w<5) such as $Li_{3.25}Ge_{0.25}P_{0.75}S_4$, etc.; lithium nitride ($Li_xN_y$, 0<x<4, 0<y<2) such as $Li_3N$, etc.; $SiS_2$-based glass ($Li_xSi_yS_z$, 0<x<3, 0<y<2, 0<z<4) such as $Li_3PO_4$-$Li_2S$-$SiS_2$, etc.; $P_2S_5$-based glass ($Li_xP_yS_z$, 0<x<3, 0<y<3, 0<z<7) such as $LiI$-$Li_2S$-$P_2S_5$, etc.; a mixture thereof; or the like, but are not limited thereto.

Further, examples of the inorganic particle having a dielectric constant of 1 or more include $SrTiO_3$, $SnO_2$, $CeO_2$,

MgO, NiO, CaO, ZnO, $ZrO_2$, $Y_2O_3$, $Al_2O_3$, $TiO_2$, SiC, a mixture thereof or the like, but are not limited thereto.

The thermal conductive inorganic particle is a material which provides low thermal resistance but no electrical conductivity and thus have insulation properties, and may be, for example, at least one selected from the group consisting of aluminum nitride (AlN), boron nitride (BN), alumina ($Al_2O_3$), silicon carbide (SiC), boehmite (AlO(OH)),and beryllium oxide (BeO), but are not limited thereto.

In case of using the above-described high dielectric inorganic particle, the inorganic particle having piezoelectricity, the thermal conductive inorganic particle and the inorganic particle having the lithium ion transfer capacity together, a synergy effect thereof may be doubled.

A size of the inorganic particle is not limited, but it is preferable that the size thereof is in a range of 0.001 to 10 $\mu$m, if possible, in order to form an appropriate porosity between the inorganic particles. If such size is less than 0.001 $\mu$m, dispersibility is deteriorated and thus it becomes difficult to control a physical property. If such size is more than 10 $\mu$m, a thickness is increased to degrade the mechanical property and also the coating layer does not fulfill a role thereof due to an excessively large pore size, but increases a chance of causing an internal short circuit while charging and discharging a battery.

A content of the inorganic particle is not particularly limited, but it is preferable that such content is in a range of 1 to 99 wt.%, more preferably in a range of 10 to 95 wt.% per 100 wt.% of a mixture of an inorganic particle and a binding material. If the content thereof is less than 1 wt.%, the content of binding material becomes excessively large to decrease a pore size and a porosity due to a decrease in empty space formed between inorganic particles, and thus mobility of lithium ion may be deteriorated. In contrast, if the content thereof is more than 99 wt.%, the content of binding material becomes excessively small to deteriorate a mechanical property of the coating layer due to a weakened adhesive strength between inorganic materials.

On the other hand, the binding material is not limited, unless it causes a side reaction with the electrolyte. In particular, the binding material may be one of which a glass transition temperature (Tg) is as low as possible, preferably in the range of -200 to 200°C. This is because such binding material may improve the mechanical properties of a final insulating film.

Further, the binding material does not need to have ion conduction capacity, but it is more preferable to use a polymer having ion conduction capacity.

Thus, it is preferable that the binding material has a high dielectric constant. Indeed, a degree of dissociation of salt in an electrolyte depends on the dielectric constant of an electrolytic solvent. As the dielectric constant of the polymer increases, the degree of dissociation of salt in the electrolyte may be improved. The dielectric constant of the polymer used may be 1 or more, particularly in a range of 1.0 to 100 (measurement frequency=1 kHz), and preferably 10 or more.

In addition to the functions described above, the binding material may have a feature of being gelled to show a high degree of swelling with an electrolytic solution, when being impregnated into the liquid electrolytic solution. Indeed, if the binding material is a polymer having an excellent degree of swelling with an electrolytic solution, the electrolytic solution injected after assembling of a battery permeates the polymer, and the polymer retaining the absorbed electrolytic solution comes to have an ion conduction capacity for the electrolyte. Thus, if possible, a solubility index of the polymer is preferably in a range of 15 to 45 $MPa^{1/2}$, more preferably in a range of 15 to 25 $MPa^{1/2}$ and 30 to 45 $MPa^{1/2}$. If the solubility index is less than 15 $MPa^{1/2}$ and more than 45 $MPa^{1/2}$, it becomes difficult to have swelling with the liquid electrolytic solution for a conventional battery.

Examples of the binding material may be one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and polyvinyl alcohol.

The total thickness of the separators 214, 215' may be 5 micrometers to 20 micrometers, particularly 5 micrometers to 15 micrometers, more particularly 6 micrometers to 13 micrometers.

In a unit cell for a bipolar battery, the separators 214, 215' may have an area ranging from 100% of the area of the negative electrode active material layer to 100% of the total area of the negative electrode, based on the negative electrode of the bipolar electrode.

If the separator exceeds the above range and becomes larger than the area of the negative electrode, ionic short circuits may occur in the bipolar structure. Therefore, it is preferable to make the separator smaller than the area of the negative electrode. The uncovered negative electrode current collector portions can prevent short circuits between electrodes through separate insulation treatment using inorganic coatings such as $Al_2O_3$ or polymer films such as PP or PET.

Referring again to FIGS. 2 to 4, the stacked body 1100 comprising the electrode (typically, 121) and the separator (typically, 122) may contain a cured gel electrolyte and thus have an exposed structure in which each unit cell does not contain a sealing member. Here, the "exposed structure" refers to a state in which no sealing material or the like is formed, thereby eliminating a physical barrier between the stacked bodies comprising the bipolar electrode (typically, 121) and the separator (typically, 122).

In addition, the bipolar assembly 1000 according to the present disclosure performs impregnation and curing of the gel electrolyte composition after manufacture of the stacked body 1100, so that all the bipolar electrodes and all the separators are wholly coupled in a stacked state and thus may have a structure in which they are joined to each other.

On the other hand, the gel electrolyte includes a lithium salt and a non-aqueous organic solvent, and one or more polymerizable compound selected from the group consisting of a polymerizable monomer, oligomer, or copolymer having a polymerizable unsaturated functional group, and at least a part of the polymerizable unsaturated functional group may be cured.

In other words, the gel electrolyte may be the one in which a gel electrolyte composition containing a lithium salt, a non-aqueous organic solvent, and one or more polymerizable compounds selected from the group consisting of a polymerizable monomer, oligomer, or copolymer having a polymerizable unsaturated functional group is cured by heat or light.

The lithium salt can be used similarly as that used in lithium secondary batteries. The lithium salt is used as a medium for transferring ions within a lithium secondary battery. For example, the lithium salt may include $Li^+$ as a cation, and at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2 (CF_3)_2CO^-$, $(CF_3SO_2)_2CH^-$, $CF_3(CF_2)_7SO_3^-$ and $SCN^-$, as an anion.

Specifically, the lithium salt may include one selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (Lithium bis(fluorosulfonyl) imide, $LiN(SO_2F)_2$), LiBETI(lithium bis(perfluoroethanesulfonyl) imide, $LiN(SO_2CF_2CF_3)_2$ and LiTFSI (lithium bis(trifluoromethanesulfonyl) imide, $LiN(SO_2CF_3)_2$), or a mixture of two or more of them. However, in terms of excellent stability, it is preferable to include $Li(N(SO_2CF_3)_2$.

Although the concentration of the lithium salt may be appropriately changed within a generally applicable range, the lithium salt may be included at a concentration of 0.5 M to 3 M, particularly at a concentration of 1 M to 2.5 M, and more particularly at a concentration of 1 M to 2 M in the electrolyte in order to obtain an optimal effect of forming a film for preventing corrosion on the electrode surface. When the concentration of the lithium salt satisfies the above range, the effect of improving the cycle characteristics during high-temperature storage of the battery is sufficient, and the viscosity of the electrolyte is appropriate, thereby capable of improving electrolyte impregnation property.

The non-aqueous organic solvent is not limited as long as it can minimize decomposition due to an oxidation reaction or the like during the subsequent charge/discharge process of the bipolar battery, and can exhibit its properties together with an additive.

For example, a carbonate-based organic solvent, an ether-based organic solvent, an ester-based organic solvent, and the like may be used alone or in mixture of two or more thereof, and specifically, a carbonate-based organic solvent may be used.

Among the organic solvents, the carbonate-based organic solvent may include at least one selected from the group consisting of a cyclic carbonate-based organic solvent and a linear carbonate-based organic solvent. Specifically, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and, more specifically, it may include dimethyl carbonate.

The ether-based organic solvent may include at least one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of $\gamma$-butyrolactone, $\gamma$-valerolactone, $\gamma$-caprolactone, $\sigma$-valerolactone, and $\varepsilon$-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, a low dielectric constant linear carbonate-based compound such as dimethyl carbonate and diethyl carbonate and a linear ester-based compound, in an appropriate ratio, an electrolyte having high electrical conductivity may be prepared, which may be more preferably used.

Moreover, the electrolyte may further comprise a functional additive. The functional additive may be included to prevent the induction of breaking of the negative electrode in a high power environment, or to further improve low-temperature high-rate discharge characteristics, high-temperature stability, overcharge prevention, swelling improvement effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and particularly 1 wt.% to 5 wt.% based on the total weight of the gel electrolyte. When the amount of the sultone-based compound in the gel electrolyte is more than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the gel electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the gel electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the gel electrolyte.

Further, the halogen-substituted carbonate-based compound may include fluoroethylene carbonate(FEC), and may be included in an amount of 5 wt.% or less based on the total weight of the gel electrolyte. When the amount of the halogen-substituted carbonate-based compound in the gel electrolyte is more than 5 wt.%, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. When the content of the cyclic carbonate-based compound in the gel electrolyte is more than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3 wt.% or less based on the total weight of the gel electrolyte.

The borate-based compound may include lithium oxalyldifluoroborate, and may be included in an amount of 3 wt.% or less based on the total weight of the gel electrolyte.

The lithium salt-based compound is a compound different from the lithium salt included in the gel electrolyte. The lithium salt-based compound may include at least one compound selected from the group consisting of $LiPO_2F_2$, LiODFB, LiBOB (lithium bisoxalate borate ($LiB(C_2O_4)_2$) and $LiBF_4$, and may be included in an amount of 3 wt.% or less based on the total weight of the gel electrolyte.

Two or more kinds of the functional additives may be mixed, and included in an amount of 20 wt.% or less, particularly 0.1 wt.% to 10 wt.%, based on the total weight of the gel electrolyte. When the content of the functional additive is more than 20 wt.%, there is a possibility that excessive side reactions in the electrolyte may occur during charge and discharge of the battery. In particular, it is not sufficiently decomposed at high temperatures, and may exist as an unreacted material or in a precipitated state in an electrolyte at room temperature. Thereby, side reactions may occur in which the lifetime or resistance characteristics of the battery are reduced.

Meanwhile, the bipolar assembly 1000 according to the present disclosure can dramatically reduce electrolyte volatilization during the manufacturing process by the manufacturing method described below, and therefore, it is irrelevant whether the bipolar assembly contains an electrolyte composition having a flash point of less than 90°C as the non-aqueous organic solvent or functional additive, providing a high degree of freedom in the selection of electrolytes.

More specifically, in the bipolar assembly 1000 according to the present disclosure, the electrolyte composition having a flash point of less than 90°C may be included in an amount of 10% or more, specifically 20% to 100%, more specifically 30% to 70%, and most specifically 60% to 80%, based on the total solvent volume of the electrolyte composition contained in the gel electrolyte.

The content of the electrolyte composition having a flash point of less than 90°C can be determined through solvent analysis of the entire gel electrolyte. More specifically, the content can be obtained by dissolving the gel electrolyte in a specific solvent, such as acetone, and then performing the electrolyte composition analysis.

The electrolyte composition having a flash point of less than 90°C may be, for example, a linear ester-based solvent or a linear carbonate-based solvent.

More specifically, the electrolyte composition having a flash point of less than 90°C may be at least one selected from the group consisting of methyl formate, ethyl formate, 1,2-dimethoxyethane, methyl acetate, 1,3-dioxolane, ethyl acetate, methyl propionate, propyl acetate, methyl butyrate, tris(trimethylsilyl)phosphate, dimethyl carbonate, propyl propionate, ethyl methyl carbonate, diethyl carbonate, ethyl propionate, ethyl butyrate, butyronitrile, ethyl methyl sulfone, propyl butyrate, diethylene glycol dimethyl ether, vinylene carbonate, and glycol sulfite. Of these, carbonate-based and propionate-based materials may be more appropriately used as the non-aqueous organic solvents and functional additives listed above. For example, at least one selected from the group consisting of dimethyl carbonate, propyl propionate, ethyl methyl carbonate, diethyl carbonate, ethyl propionate, and vinylene carbonate may be included in an amount of 10 vol.% or more, specifically 20 vol.% to 100 vol.%, more specifically 30 vol.% to 70 vol.%, and most specifically 60 vol.% to 80 vol.%.

The electrolyte composition having a flash point of less than 90°C exhibits high volatility, but has excellent high-temperature storage properties and positively affect rate and lifetime characteristics, making them highly applicable to batteries.

In conventional manufacturing methods, these materials were difficult to use due to their high volatility, however, the present disclosure can dramatically reduce electrolyte volatilization, allowing the use of these electrolyte compositions.

Furthermore, the gel electrolyte must contain a polymerizable compound such as a polymerizable monomer, oligomer, or copolymer for gelation. The polymerizable compound is a material having a polymerizable unsaturated functional group, for example, a compound which has a polymerizable unsaturated functional group selected from the group consisting of vinyl, epoxy, allyl and (meth)acryl groups, and can be converted into a gel type through polymerization or crosslinking. The polymerizable compound is not particularly limited, as long as it is used conventionally as a polymerizable monomer, oligomer or copolymer for preparing a gel electrolyte.

More specifically, non-limiting examples of the polymerizable monomer or oligomer include tetraethylene glycoldiacrylate, polyethylene glycol diacrylate (molecular weight 50~20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxy octane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in mixture of two or more thereof.

In addition, as a representative example, the copolymer include at least one copolymer selected from the group consisting of allyl 1,1,2,2-tetrafluoroethyl ether (TFE)-(2,2,2-trifluoroethyl acrylate) polymer, TFE-vinyl acetate, TFE-(2-vinyl-1,3-dioxolane) polymer, TFE-vinyl methacrylate polymer, TFE-acrylonitrile polymer, TFE-vinyl acrylate polymer, TFE-methyl acrylate polymer, TFE-methyl methacrylate(MMA) polymer and TFE-2,2,2-trifluoroethyl acrylate(FA) polymer.

The polymer formed through the curing of the above materials may be included in an amount of 0.01 wt.% to 20 wt.% based on the total weight of the gel electrolyte. When the content of the polymer is more than 20 wt.%, the amount of the polymerizable material increases during the preparation of the gel electrolyte, so that gelation occurs too quickly or is formed too densely, resulting in a disadvantage in that a gel with high resistance is obtained. On the contrary, when the content is less than 0.01 wt.%, the effect due to gelation cannot be obtained, which is not preferable.

Meanwhile, the gel electrolyte of the present disclosure may further include a polymerization initiator for polymerization of the polymerizable unsaturated functional group, and a conventional thermal polymerization initiator or photopolymerization initiator known in the art may be used. For example, the initiator may be decomposed by heat to form radicals, and react with the polymerizable monomer, oligomer, or polymer through free radical polymerization to form a gel electrolyte.

More particularly, examples of the polymerization initiator include organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azo-bis(2-cyanobutane), 2,2'-azobis(methylbutyronitrile), 2,2'-azobis(iso-butyronitrile) (AIBN) and 2,2'-azobisdimethyl valeronitrile (AMVN), or the like, but are not limited thereto.

The polymerization initiator is decomposed by heat including by way of non-limiting example, heat of 30°C to 100°C, or decomposed at room temperature (5°C to 30°C) to form radicals in a bipolar unit cell, and the polymerizable unsaturated functional group of a polymerizable monomer, oligomer, or polymer can react by free radical polymerization to form a gel electrolyte.

The polymerization initiator may be included in an amount of 0.01 to 20 parts by weight, particularly 0.01 to 1 parts by weight, based on 100 parts by weight of the polymerizable compound.

When the polymerization initiator is included within a range of 0.01 to 20 parts by weight, it is possible to increase the gel conversion rate so that gel electrolyte properties may be ensured, and to prevent a pre-gelation reaction so that the wettability of an electrode with an electrolyte may be improved.

### Bipolar battery

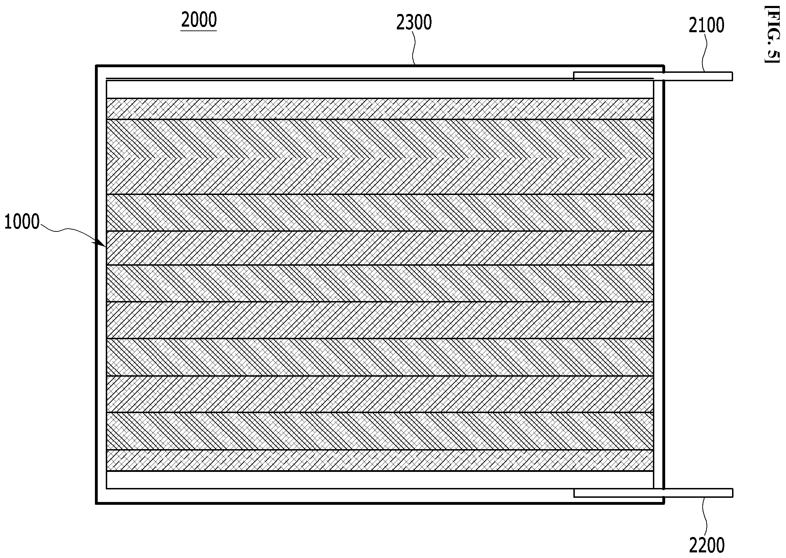

FIG. 5 shows a cross-sectional schematic diagram of a bipolar battery 2000 including a bipolar assembly 1000.

Referring to FIG. 5, the bipolar battery 2000 has a structure in which it is built into a battery case 2300 in a state in which a positive electrode terminal 2100 and a negative electrode terminal 2200 are respectively attached to the single-sided electrodes located at the outermost parts of the bipolar assembly 1000.

In this case, the positive electrode terminal 2100 and the negative electrode terminal 2200 have a structure that extends outward from the battery case 2300, thereby enabling charge and discharge via electrical connection.

While the figure shows a configuration in which the positive electrode terminal 2100 and the negative electrode terminal 2200 are attached separately, instead of terminal configurations, the current collector of the outermost electrode may replace the role, or a separate metal plate may be attached to the outside of the current collector into a size of 50% to 110% of the current collector area to replace the role.

The battery case 2300 may be a conventional pouch-type battery case or a metal battery case, but is not limited thereto. Specifically, the battery case may be a pouch-type battery case. As another example, a polymer plastic material such as polyolefin, specifically polypropylene, may also be used.

### Method for manufacturing bipolar battery

According to another embodiment of the present disclosure, there is provided a method for manufacturing a bipolar battery, the method comprising:

(a) preparing a unit cell by stacking a bipolar electrode and a separator,
(b) manufacturing a stacked body by stacking two or more of the unit cells such that a single-sided electrode is disposed at the outermost part,
(c) housing and impregnating the stacked body in a housing member containing a gel electrolyte composition, and curing the gel electrolyte composition in a pressurized state to form a gel electrolyte.

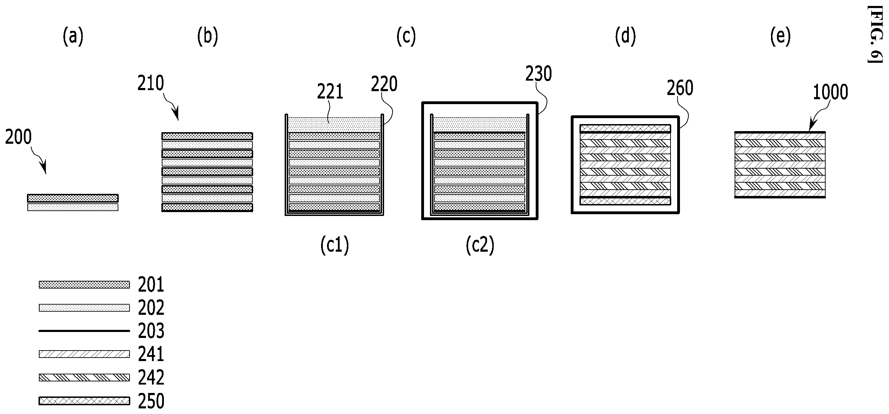

For ease of understanding, FIG. 6 shows a schematic diagram of a method for manufacturing a bipolar assembly 1000 according to the present disclosure.

First, to manufacture a bipolar assembly 1000, a bipolar electrode 201 and a separator 202 are stacked to form a unit cell (a).

Specifically, the bipolar electrode 201 and the separator 202 are each cut into a unit size before stacking, and then adhered together to form a unit cell.

At this time, the adhesion of the bipolar electrode 201 and the separator 202 can be achieved by using an adhesive or by laminating them.

The figure shows a structure in which the bipolar electrode 201 and the separator 202 are stacked one by one, but it goes without saying that the unit cell can be formed in various structures as described above.

In other words, according to the manufacturing method of the present disclosure, the unit cell is manufactured without impregnating the bipolar electrode 201 and the separator 202 with a separate gel electrolyte composition. Therefore, during the manufacturing process of the bipolar electrode 201 and separator 202, as well as during the manufacturing process of the unit cell, volatilization issues with the gel electrolyte composition do not occur.

Moreover, the unit cell may have an exposed structure without forming separate separators or sealing members.

Consequently, since a sealing structure is not formed for each unit cell, the unit cells can be manufactured using a simpler method, thereby improving assembly process efficiency.

Subsequently, two or more unit cells comprising bipolar electrodes 201 and separators 202 are stacked, and a stacked body 210 is manufactured such that single-sided electrodes 203 are disposed on both outermost sides (b).

At this time, each unit cell and single-sided electrode are aligned and stacked so that the positive electrode and the negative electrode are alternately arranged. At this time, since no separate pressurization is performed, the unit cells are not completely joined, and may have a predetermined space between them.

Therefore, subsequent impregnation of the gel electrolyte composition can be facilitated by the components of each unit cell.

Furthermore, since the stacked body 210 has single-sided electrodes 203 disposed on both sides of the outermost shell, a current collector is located on the outermost shell. Since this current collector is made of a material such as metal foil, it can act as a protective film that prevents volatilization of the gel electrolyte composition impregnated in the bipolar electrode 201 and the separator 202.

Therefore, according to the manufacturing method of the present disclosure, since the stacked body 210 is manufactured before the gel electrolyte composition is impregnated, even if the gel electrolyte composition is subsequently impregnated in the bipolar electrode 201 and the separator 202, the possibility of the gel electrolyte composition being exposed to the surface and volatilized can be dramatically reduced.

Meanwhile, after the stacked body 210 is manufactured in this manner, it is housed in a housing member 220 containing a gel electrolyte composition 221 and impregnated therein (c).

That is, according to the manufacturing method of the present disclosure, electrolyte impregnation can be achieved by a method of simply housing the stacked body 210 in a housing member 220 containing a gel electrolyte composition 221. Therefore, the manufacturing process can also be simplified. In this case, the housing member 220 may be an open-type electrolyte box having an opened upper part, or a battery case that houses the stacked body 210.

That is, in an embodiment, as shown in FIG. 6, the stacked body 210 is placed separately in an electrolyte box and impregnated, and then the stacked body 210 is withdrawn to remove the gel electrolyte composition 221 remaining on the outside of the stacked body 210, and then cured. Thereby a bipolar assembly 1000 impregnated with the gel electrolyte is produced, which is then housed in a battery case, thereby manufacturing a bipolar battery.

Alternatively, although not shown in FIG. 6, the stacked body 210 may be housed in a battery case, the gel electrolyte composition may be injected, and then the case may be sealed and then subjected to a curing process in that state.

Meanwhile, in either case, in order to ensure that the gel electrolyte composition 221 is uniformly impregnated into the bipolar electrode 201 and separator 202, impregnation of the gel electrolyte composition 221 can be performed under vacuum conditions.

Specifically, the stacked body 210 is housed in the housing member 220, more specifically, the stacked body 210 is placed in the vacuum chamber 230 in a state in which one side of the housing member 220 is open, and vacuum application and vacuum release are repeated, thereby impregnating the gel electrolyte composition 221.

At this time, the vacuum application may be repeating vacuum application and vacuum release four or more times.

In this case, the vacuum application may be maintained in the range of -100 kPa to -90 kPa for 3 to 10 minutes per cycle, and more specifically, in the range of -97 kPa to -93 kPa for 5 to 7 minutes per cycle.

The vacuum release can be maintained for 1 to 10 minutes per cycle.

The vacuum application, including the vacuum application and release, can be performed four or more times, and more specifically, five time or more and ten times or less. Taking into account both the impregnability of the gel electrolyte composition and the manufacturing time, more specifically, the vacuum application can be performed seven to eight times.

Subsequently, a room-temperature aging process may be performed to allow the gel electrolyte composition to be sufficiently impregnated into each material. For example, the stacked body 210 may be stored at room temperature for about 24 hours to 5 days in the state of being housed in the housing member 220.

When the gel electrolyte composition 221 is sufficiently impregnated into the stacked body 210 in this manner, the gel electrolyte composition 221 is cured in a pressurized state to form a gel electrolyte (d).

At this time, in an embodiment, as shown in FIG. 6, curing of the gel electrolyte composition 221 can be achieved in a state in which the stacked body 210 is pressurized by an external jig 250.

Alternatively, although not shown in the figure, if the housing member is a battery case, the housing member can be sealed, and the stacked body can be housed within the housing member in the state of being pressurized by an external jig.

In either case, the bipolar electrode 241 and the separator 242 are impregnated and cured with the gel electrolyte composition 221 in the stacked body 210, which may drastically reduce electrolyte volatilization, and thus may dramatically reduce the area where the gel electrolyte does not exist, i.e., the gel electrolyte pore. Both the electrode 241 and the separator 242 can be joined by the curing of the gel electrolyte composition 221, which results in a robustly bonded structure as a whole. Therefore, it is possible to adjust the thickness of the stacked body 210 within the design thickness range while further improving battery performance.

This curing can also be performed in a vacuum, or may be performed by applying light or heat. While the light irradiation has the advantage of achieving curing in a short time, it is difficult to uniformly apply light irradiation to the interior of the stacked body 210 due to the external jig 250. Specifically, curing can be performed by applying heat.

Specifically, the method of applying heat to cure can be performed by placing the stacked body 210 in a state pressurized by an external jig 250 or the stacked body 210 housed in a housing member into a vacuum high-temperature chamber 260 and applying heat.

The application of heat may be performed at a temperature ion the range of 50°C to 80°C for 2 hours to 10 hours, more specifically at a temperature in the range of 60°C to 80°C for 4 to 8 hours, and more specifically at a temperature in the range of 60°C to 70°C for 4 to 6 hours.

Furthermore, the vacuum state can be achieved by connecting a vacuum pump capable of creating a vacuum within the high-temperature chamber. When the curing process is performed under vacuum, oxygen is not present, thereby enhancing curability and further improving the battery performance of the finally manufactured bipolar battery.

Meanwhile, according to the manufacturing method of a bipolar battery of the present disclosure, the method may further comprise a process of removing the pressure after the gel electrolyte composition 221 has been cured (e).

Removal of pressurization is performed by detaching the external jig 250. When removal is performed up to pressurization in this manner, a bipolar assembly 1000 that is entirely impregnated with gel electrolyte is manufactured.

Although not shown in the figure, if the housing member is a battery case as described above, the bipolar battery can be manufactured immediately.

Meanwhile, when manufacturing a bipolar assembly, an additional process of removing external impurities may be performed. Additional processes such as packaging and electrode terminal attachment may be performed to manufacture a bipolar battery.

Hereinafter, the present disclosure will be described with reference to Examples to demonstrate that the invention exhibits the intended improved effects.

**<Comparative Example 1>**

LiFePO$_4$ as a positive electrode active material, carbon nanotubes as a conductive material, and PVDF as a binder were added into an NMP solvent in a weight ratio of 96:1:3 and dispersed to prepare a positive electrode slurry. The positive electrode slurry was then coated to a thickness of 110micrometers on one surface of the Al metal thin film, followed by drying and rolling to produce a positive electrode.

Additionally, LiPF$_6$ was dissolved to a 1.0 M concentration in a non-aqueous organic solvent with a composition of ethylene carbonate (EC) : ethyl methyl carbonate (EMC) = 30 : 70 (volume ratio). 10 wt.% of trimethylolpropane triacrylate as a polymerizable compound and 0.4 parts by weight of azobisisobutyronitrile (AIBN, V59) as a polymerization initiator based on 100 parts by weight of the polymerizable compound were added to prepare a gel electrolyte composition.

The positive electrode was immersed in an electrolyte box containing the gel electrolyte composition, impregnated by applying a vacuum, and then stored for three days. The positive electrode was then removed, and the electrode surface was covered with a transparent film to prevent the surface electrolyte from volatilizing, and then cured.

A vacuum of -95 kPa was applied for about 5 minutes, followed by release of the vacuum. This process was repeated eight times, and storage was then performed at room temperature for three days.

Curing of the gel electrolyte composition was performed using UV photocuring.

**<Comparative Example 2>**

The positive electrode prepared in Comparative Example 1 was used.

Additionally, LiPF$_6$ was dissolved to a 1.0 M concentration in a non-aqueous organic solvent with a composition of ethylene carbonate (EC) : gamma-butyrolactone (GBL) = 30 : 70 (volume ratio). 10 wt.% of trimethylolpropane triacrylate as a polymerizable compound and 0.4 part by weight of azobisisobutyronitrile (AIBN, V59) as a polymerization initiator based on 100 parts by weight of the polymerizable compound were added to prepare a gel electrolyte composition,

The positive electrode was immersed in an electrolyte box containing the gel electrolyte composition, impregnated by applying a vacuum, and then stored for three days. The positive electrode was removed, and the electrode surface was covered with a transparent film to prevent volatilization of the surface electrolyte, followed by curing.

A vacuum of -95 kPa was applied for about 5 minutes, followed by release of the vacuum. This process was repeated eight times, and storage was then performed at room temperature for three days.

Curing of the gel electrolyte composition was performed using UV photocuring.

**<Example>**

A mixture of graphite and SiO (weight ratio 95:5) as a negative electrode active material, carbon black as a conductive material, styrene-butadiene rubber (SBR) as a binder, and carboxymethyl cellulose (CMC) as a filler were mixed in a water solvent at a weight ratio of 96:1:2:1 to prepare a negative electrode slurry. The negative electrode slurry was coated onto one surface of a Cu metal thin film to a thickness of 80 micrometers, dried, and rolled to produce a negative electrode.

A CCS separator (thickness: 13 micrometers) having an organic-inorganic mixed layer ($Al_2O_3$:PVdF = 95:5) formed on both surfaces of a polyolefin substrate was interposed as a separator between the positive electrode and the negative electrode produced in Comparative Examples, thereby producing a unit cell.

The unit cell was housed in an electrolyte box containing the gel electrolyte composition of Comparative Example 1, and vacuum was applied to -95 kPa for about 5 minutes, and then released. This process was repeated eight times, and then the unit cell was removed from the electrolyte box and stored at room temperature for 3 days.

The gel electrolyte composition was then cured, and the curing was performed by applying heat at about 60°C for 5 hours.

**<Experimental Example 1>**

The following experiments were conducted to compare the degree of electrolyte volatilization between a conventional case in which the electrodes and separator themselves were impregnated with electrolyte to manufacture a bipolar assembly and a case in which the electrolyte was impregnated after manufacture of the stacked body according to the present disclosure.

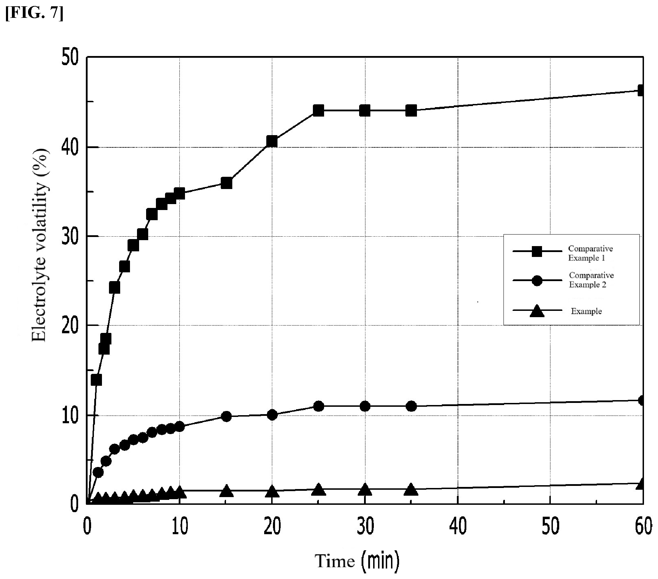

Specifically, to measure the electrolyte volatility of the electrodes manufactured in Comparative Examples 1 and 2 and the unit cells manufactured in Examples, the weight changes over time were measured while the gel electrolyte compositions were left at room temperature before curing, and the amount of electrolyte volatilization was measured by the following method. The results are shown in Table 1 and FIG.7.

*Total volatility (%) = (Total electrolyte weight before left to stand - Electrolyte weight after left to stand) / Total weight of electrolyte left to stand *100

The electrolyte weight is calculated by subtracting the electrode or unit cell weight before impregnation from the electrode or unit cell weight after impregnation.

In this case, Example consisted of two electrodes, the total volatility was calculated by dividing it by 2.

[Table 1]

| Time(min) | Comparative Example 1(%) | Comparative Example 2(%) | Example(%) |
|---|---|---|---|
| 0 | 0 | 0 | 0 |
| 1 | 13.9 | 3.7 | 0.32 |
| 2 | 18.6 | 4.9 | 0.56 |
| 3 | 24.4 | 6.3 | 0.60 |
| 4 | 26.7 | 6.8 | 0.61 |
| 5 | 29.0 | 7.4 | 0.74 |
| 10 | 34.8 | 8.7 | 0.84 |
| 20 | 40.7 | 10.2 | 0.84 |
| 30 | 44.1 | 11.0 | 1.06 |
| 60 | 46.5 | 11.6 | 1.18 |

Referring to Table 1 above and FIG. 7 below, it can be confirmed that when manufactured by a conventional manufacturing method, the electrodes are exposed to the surface, so that the electrolyte volatility over time is very high. Furthermore, it can be confirmed that volatility is high even when using an electrolyte solvent with a flash point of 90°C or more. On the other hand, it can be confirmed that when undergoing a manufacturing process as in the present disclosure, the electrolyte volatility is significantly reduced, and thus, the present disclosure offers higher degree of freedom in selecting electrolyte composition.

Furthermore, it can be predicted therefrom that the bipolar battery according to the present disclosure exhibits virtually no gel electrolyte volatilization.

## <Experimental Example 2>

A mixture of graphite and SiO (weight ratio 95:5) as a negative active material, carbon black as a conductive material, styrene-butadiene rubber (SBR) as a binder, and carboxymethyl cellulose (CMC) as a filler were mixed in a water solvent at a weight ratio of 96:1:2:1 to prepare a negative electrode slurry. The negative electrode slurry was coated onto one surface of a Cu metal thin film to a thickness of 70 micrometers, dried, and rolled to produce a negative electrode.

The negative electrode was immersed in an electrolyte box containing the gel electrolyte composition, impregnated by applying vacuum, and then stored for three days. The negative electrode was removed, and the electrode surface was covered with a transparent film to prevent volatilization of the surface electrolyte, followed by curing. The curing method was the same as described in Comparative Example.

Additionally, as the separator, a CCS separator (thickness: 13 micrometers) with an organic-inorganic mixed layer ($Al_2O_3$:PVdF = 95:5) formed on both surfaces of a polyolefin substrate was immersed in an electrolyte box, impregnated by applying vacuum, and then stored for 3 days. The separator was then removed, and covered with a transparent film to prevent volatilization of the surface electrolyte, followed by curing. The positive electrode, negative electrode and separator each impregnated with the gel electrolyte were stacked into 3 stack to manufacture the bipolar battery of Comparative Example 1. During the manufacturing process, the amount of electrolyte in Comparative Example 1 was reduced from 1.91 cc to 1.66 cc, showing a decrease of about 13.1 vol.%.

Furthermore, the bipolar battery of Example was manufactured using the unit cell of Example. The amount of electrolyte in Example was reduced from 2.07 cc to 2.02 cc, showing a decrease of about 1.75 vol.%. Therefore, it can be seen that the gel electrolyte pore volume within the stacked body is less than 2%. This is nearly similar, with a small error margin of within 1%, to the method defined above, when calculating the gel electrolyte void volume using the volume ratio obtained by subtracting the amount of impregnated electrolyte from the total pore volume.

The bipolar batteries manufactured in Comparative Example 1 and the bipolar batteries of Examples were subjected to initial (one-time) charge/discharge using an electrochemical charger/discharger. At this time, charging was performed at a current density of 0.1 C-rate up to a voltage of 4.3 V, and discharging was performed at the same current density up to 2.5 V. This charge/discharge cycle was repeated five times in total.

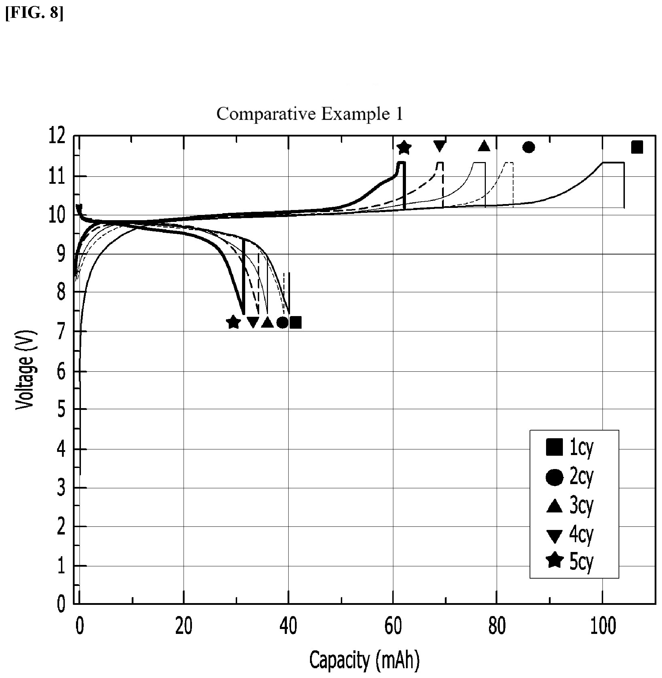

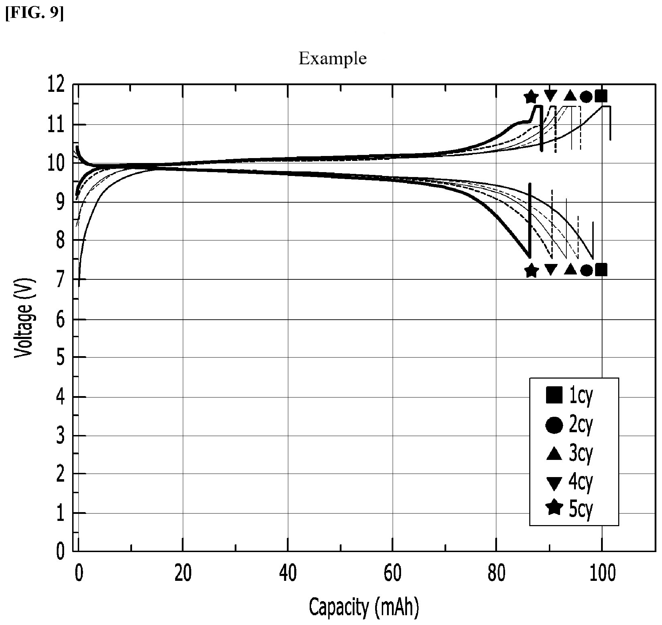

During the charge/discharge process described above, the voltage and capacity of the positive and negative electrodes in each battery were measured, and the results are shown in FIGS. 8 and 9. Additionally, the discharge capacities of each battery are shown in Table 2 below.

[Table 2]

| cycle | Comparative Example 1 (mAh) | Example (mAh) |
|---|---|---|
| 1 | 39.814 | 97.721 |
| 2 | 38.964 | 94.907 |
| 3 | 36.032 | 93.439 |
| 4 | 34.076 | 90.301 |
| 5 | 31.38 | 85.938 |

Referring to FIGS. 8 and 9 and Table 2, it can be confirmed that in the case of the bipolar battery of Comparative Example 1, numerous pores were generated due to the gel electrolyte volatilized from the electrodes and separator, and severe precipitation occurred due to a lack of electrolyte, which results in a very high battery irreversibility and a rapid decrease in capacity, whereas the bipolar battery of the present disclosure exhibited improved lifetime performance.

Based on the above disclosure, it will be understood by those of ordinary skill in the art that various applications and modifications can be made within the scope and spirit of the present disclosure.

## [INDUSTRIAL APPLICABILITY]

In the bipolar battery according to the present disclosure, since electrolyte volatilization is minimized during the gel electrolyte impregnation and curing processes, the bipolar electrodes and separator are uniformly impregnated with the gel electrolyte, and the gel electrolyte pores within the stacked body are not virtually generated, so that the performance of the bipolar battery can also be improved.

The bipolar battery according to the present disclosure also has the advantage of simplifying its structure by not requiring a separate sealing structure even while applying a gel electrolyte.

Furthermore, the method for manufacturing a bipolar battery according to the present disclosure does not involve injecting electrolyte into individual unit cells, but rather involves placing a stacked body in which many unit cells were stacked into a housing member and impregnating them at once, thereby minimizing volatilization of the gel electrolyte composition during the manufacturing process. Thus, gel electrolyte materials having volatility can also be applied, thereby providing higher degree of freedom in the selection of electrolyte types and saving the electrolyte impregnation time.

**Claims**

1. A bipolar battery comprising:

   a bipolar assembly comprising a stacked body containing a bipolar electrode and a separator, and a gel electrolyte impregnated throughout the stacked body; and a battery case,
   wherein the gel electrolyte voids within the stacked body are 5% or less of the total volume capable of gel electrolyte impregnation.

2. The bipolar battery according to claim 1,
   wherein the bipolar electrode comprises an integrated electrode in which a positive electrode active material layer and a negative electrode active material layer are respectively coated onto both surfaces of a single current collector, a positive electrode in which a positive electrode active material layer is formed on one surface of a positive electrode collector, or a negative electrode in which a negative electrode active material layer is formed on one surface of a negative electrode collector.

3. The bipolar battery according to claim 2,
   wherein the stacked body is configured to stack at least one selected from the group consisting of: a unit cell having a structure in which the positive electrode active material layer of the integrated electrode and the separator face each other, a unit cell having a structure in which the positive electrode and the negative electrode are separately included and the separator is interposed between the positive electrode and the negative electrode, a unit cell having a structure in which a single-sided electrode and a separator are stacked, and a single-sided electrode.

4. The bipolar battery according to claim 1,
   wherein the stacked body is configured such that single-sided electrodes of different polarities are located on both outermost sides in the stacking direction.

5. The bipolar battery according to claim 1,
   wherein the stacked body does not comprise a sealing member.

6. The bipolar battery according to claim 1,
   wherein the gel electrolyte comprises an electrolyte composition having a flash point of less than 90°C.

7. The bipolar battery according to claim 6,
   wherein the electrolyte composition having a flash point of less than 90°C is contained in an amount of 10% or more based on the total volume of the electrolyte composition contained in the gel electrolyte.

8. The bipolar battery according to claim 6,
   wherein the electrolyte composition having a flash point of less than 90°C is at least one selected from the group consisting of methyl formate, ethyl formate, 1,2-dimethoxyethane, methyl acetate, 1,3-dioxolane, ethyl acetate, methyl propionate, propyl acetate, methyl butyrate, tris(trimethylsilyl)phosphate, dimethyl carbonate, propyl propionate, ethyl methyl carbonate, diethyl carbonate, ethyl propionate, ethyl butyrate, butyronitrile, ethyl methyl sulfone, propyl butyrate, diethylene glycol dimethyl ether, vinylene carbonate, and glycol sulfite.

9. The bipolar battery according to claim 1,
   wherein all the bipolar electrodes and all the separators included in the stacked body are wholly coupled in a stacked state by the gel electrolyte.

**10.** The bipolar battery according to claim 1,
wherein a positive electrode terminal and a negative electrode terminal are respectively attached to the outermost electrodes on both sides of the bipolar assembly in the stacking direction.

**11.** A method for manufacturing a bipolar battery, the method comprising:

(a) preparing a unit cell by stacking a bipolar electrode and a separator,
(b) manufacturing a stacked body by stacking two or more of the unit cells such that a single-sided electrode is disposed at the outermost part,
(c) housing and impregnating the stacked body in a housing member containing a gel electrolyte composition, and curing the gel electrolyte composition in a pressurized state to form a gel electrolyte.

**12.** The method for manufacturing a bipolar battery according to claim 11,
wherein the unit cell is prepared by cutting the bipolar electrode and the separator into unit sizes and then adhering them to each other.

**13.** The method for manufacturing a bipolar battery according to claim 11,
wherein each of the unit cells does not comprises a sealing member.

**14.** The method for manufacturing a bipolar battery according to claim 11,
wherein the gel electrolyte composition contains an electrolyte composition having a flash point of less than 90°C in an amount of 10% or more based on the total solvent volume.

**15.** The method for manufacturing a bipolar battery according to claim 11,
wherein the housing member is an open-type electrolyte box having an opened upper part, or a battery case that houses the stacked body.

**16.** The method for manufacturing a bipolar battery according to claim 15,
wherein, when the housing member is the electrolyte box, the method further comprises housing the stacked body in a battery case after the gel electrolyte is formed.

**17.** The method for manufacturing a bipolar battery according to claim 11,
wherein impregnation of the gel electrolyte composition is performed under a vacuum application state.

**18.** The method for manufacturing a bipolar battery according to claim 17,
wherein the vacuum application involves repeating vacuum application and vacuum release four or more times.

**19.** The method for manufacturing a bipolar battery according to claim 18,
wherein the vacuum application is maintained in the range of -100 kPa to -90 kPa for 3 to 10 minutes per application.

**20.** The method for manufacturing a bipolar battery according to claim 11,
wherein the curing is performed by applying heat at a temperature in the range of 50°C to 80°C under vacuum conditions for a period of 2 to 10 hours.

**21.** The method for manufacturing a bipolar battery according to claim 11, further comprising releasing the pressurized state after curing of the gel electrolyte composition.

[FIG. 1]

[FIG. 2]

[FIG. 3]

210

214

212

211

213

[FIG. 4]

210'

211'

212'

215'

214'

213'

[FIG. 5]

[FIG. 6]

[FIG. 7]

[FIG. 8]

Comparative Example 1

[FIG. 9]

Example

## INTERNATIONAL SEARCH REPORT

| | International application No. |
|---|---|
| | **PCT/KR2025/010173** |

| A. | CLASSIFICATION OF SUBJECT MATTER |
|---|---|

**H01M 10/04**(2006.01)i; **H01M 10/0565**(2010.01)i; **H01M 10/0585**(2010.01)i; **H01M 10/0525**(2010.01)i; **H01M 4/04**(2006.01)i; **H01M 50/618**(2021.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/04(2006.01); H01M 10/05(2010.01); H01M 10/052(2010.01); H01M 10/058(2010.01); H01M 2/08(2006.01); H01M 2/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 바이폴라 조립체(bipolar assembly), 전지 케이스(battery case), 공극(void), 함침 (impregnation), 젤 전해질(gel electrolyte)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2011-0055443 A (LG CHEM, LTD.) 25 May 2011 (2011-05-25) paragraphs [0001]-[0087], claim 8 and figure 2 | 1-5,9,11-13,15-16 |
| Y | | 6-8,10,14,17-21 |
| Y | KR 10-2023-0172495 A (GLOBAL GRAPHENE GROUP, INC.) 22 December 2023 (2023-12-22) paragraphs [0090]-[0093] | 6-8,14 |
| Y | KR 10-2007-0085876 A (NISSAN MOTOR CO., LTD.) 27 August 2007 (2007-08-27) paragraph [0015] and figure 12 | 10 |
| Y | KR 10-2023-0052252 A (LG ENERGY SOLUTION, LTD.) 19 April 2023 (2023-04-19) paragraphs [0115]-[0168] | 17-21 |
| A | KR 10-2015-0068244 A (HYUNDAI MOTOR COMPANY) 19 June 2015 (2015-06-19) paragraphs [0033]-[0037] and figure 1 | 1-21 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2025** | **21 October 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 765 276 A1

**INTERNATIONAL SEARCH REPORT**
Information on patent family members

International application No.

**PCT/KR2025/010173**

| Patent document cited in search report | | | Publication date (day/month/year) | Patent family member(s) | | | Publication date (day/month/year) |
|---|---|---|---|---|---|---|---|
| KR | 10-2011-0055443 | A | 25 May 2011 | CN | 102668225 | A | 12 September 2012 |
| | | | | CN | 102668225 | B | 31 August 2016 |
| | | | | EP | 2503635 | A2 | 26 September 2012 |
| | | | | EP | 2503635 | B1 | 02 January 2019 |
| | | | | KR | 10-1419572 | B1 | 16 July 2014 |
| | | | | KR | 10-1501337 | B1 | 11 March 2015 |
| | | | | KR | 10-2013-0028128 | A | 18 March 2013 |
| | | | | US | 2011-0189577 | A1 | 04 August 2011 |
| | | | | WO | 2011-062419 | A2 | 26 May 2011 |
| | | | | WO | 2011-062419 | A3 | 27 October 2011 |
| | | | | WO | 2011-062419 | A9 | 09 September 2011 |
| KR | 10-2023-0172495 | A | 22 December 2023 | CN | 117321807 | A | 29 December 2023 |
| | | | | JP | 2024-510499 | A | 07 March 2024 |
| | | | | US | 11881580 | B2 | 23 January 2024 |
| | | | | US | 2022-0302440 | A1 | 22 September 2022 |
| | | | | WO | 2022-198241 | A1 | 22 September 2022 |
| KR | 10-2007-0085876 | A | 27 August 2007 | CN | 101076915 | A | 21 November 2007 |
| | | | | CN | 101076915 | B | 21 April 2010 |
| | | | | EP | 1841001 | A1 | 03 October 2007 |
| | | | | EP | 1841001 | B1 | 05 September 2018 |
| | | | | JP | 2011-151016 | A | 04 August 2011 |
| | | | | JP | 4876920 | B2 | 15 February 2012 |
| | | | | JP | 5365619 | B2 | 11 December 2013 |
| | | | | US | 2009-0233164 | A1 | 17 September 2009 |
| | | | | US | 2012-0005882 | A1 | 12 January 2012 |
| | | | | US | 8076021 | B2 | 13 December 2011 |
| | | | | US | 8415049 | B2 | 09 April 2013 |
| | | | | WO | 2006-062204 | A1 | 15 June 2006 |
| KR | 10-2023-0052252 | A | 19 April 2023 | CN | 117280512 | A | 22 December 2023 |
| | | | | EP | 4369460 | A1 | 15 May 2024 |
| | | | | JP | 2023-553179 | A | 20 December 2023 |
| | | | | JP | 7674484 | B2 | 09 May 2025 |
| | | | | US | 2024-0322408 | A1 | 26 September 2024 |
| | | | | WO | 2023-063727 | A1 | 20 April 2023 |
| KR | 10-2015-0068244 | A | 19 June 2015 | KR | 10-1646313 | B1 | 05 August 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240092124

- KR 1020250093154